# FASCICULE DE BREVET EUROPEEN

(11) **EP 1 518 757 B1**
(45) Date de publication et mention de la délivrance du brevet: **20.06.2007**
(21) Numéro de dépôt: 04447199.3
(22) Date de dépôt: 13.09.2004
(51) Int. Cl.: B60R 11/04, F16M 11/20, F16M 11/42, F16F 9/04, G03B 37/02

(54) **Travelling et procédé de filmage**
Kamerafahrt und Verfahren zum Filmen
Travelling and method of filming

(30) Priorité: 12.09.2003 EP 03020744
(43) Date de publication de la demande: 30.03.2005
(73) Titulaire: Wodon, Eric, 1490 Court-Saint-Etienne (BE)
(72) Inventeur: Wodon, Eric, 1490 Court-Saint-Etienne (BE)

(56) Documents cités:
- EP-A- 0 099 809
- DE-C1- 3 719 665
- US-A- 2 224 901
- JEAN BERTIN: "Les véhicules à coussins d'air" 23 janvier 1963 (1963-01-23), , XP002273650 Extrait de l'Internet: URL:http://aernav.free.fr/Coussin/Vehicule s_CA.html> * alinéas [0001] - [0005], [0007]; figures 1,2 *
- VFAGADGETS: 1 janvier 2002 (2002-01-01), , XP002316412 Extrait de l'Internet: URL:http://www.vfgadgets.com/WarrenDolly.h tml> [extrait le 2005-02-01] * le document en entier *
- 1 janvier 1997 (1997-01-01), , BURBANK, CA, USA , XP002316413 Extrait de l'Internet: URL:http://www.microdolly.com/index3.html> [extrait le 2005-02-01] * le document en entier *

## Description

### Domaine de l'invention

L'invention se rapporte aux prises de vues, particulièrement aux prises de vues cinématographiques et de télévision.

L'invention concerne plus particulièrement un travelling destiné aux prises de vues cinématographiques et/ou de télévision.

### Etat de la technique

Les prises de vues cinématographiques et de télévision font fréquemment appel à la technique du travelling. Dans cette technique, un appareil de prises de vues (une caméra de cinéma ou de télévision) est monté sur un chariot que l'on déplace vis-à-vis d'une scène à filmer. Le déplacement du chariot doit être opéré dans des conditions strictes, évitant les mouvements incontrôlés tels que des vibrations ou des chocs. Il existe des circonstances dans lesquelles ces conditions sont difficiles à réaliser, notamment lors des prises de vues sur des terrains accidentés, dans des ruelles pavées ou sur des plans d'eau. Pour réaliser des prises de vues en travelling dans de telles conditions, on réalise habituellement un chemin de roulement adéquat sur lequel on fait rouler le chariot portant l'appareil de prises de vues. Ces chemins de roulement consistent habituellement en une paire de rails (du type de ceux utilisés dans les chemins de fer) posés sur le sol. Un exemple de travelling connu est décrit dans le document WO 01/92952. Les chemins de roulement de ces travellings connus sont coûteux. Leur construction prend du temps et retarde d'autant le programme de prises de vues. Ces inconvénients se répercutent sur le coût de la réalisation des prises de vues et du tournage des films cinématographiques. Ils sont particulièrement importants lorsque les films à réaliser comprennent un grand nombre de scènes différentes, dans des lieux différents ou sur des terrains accidentés.
Les prises de vues en travelling sur des plans d'eau sont difficiles et elles sont souvent impossiblesen mer. Un autre désavantage des travellings connus est le manque de souplesse dans les prises de vues, du fait que le véhicule du travelling est assujetti à son chemin de roulement et ne peut pas s'en écarter.

Le document EP-A 0 099 809 concerne la stabilisation d'appareils de prises de vues cinématographiques sur des véhicules rapides. Les véhicules rapides considérés dans ce document comprennent notamment les automobiles, les aéroglisseurs, les hydroglisseurs, les avions et les hélicoptères. Dans ce document, les véhicules et leur appareil de prises de vues ne sont pas des travelling dans le sens où on l'entend habituellement dans l'industrie cinématographique ou de la télévision.

### Résumé de l'invention

L'invention vise à fournir un travelling de conception nouvelle, qui évite les inconvénients cités plus haut des travellings connus et qui permet des prises de vues sur des terrains accidentés, sur des plans d'eau et en mer, avec une grande souplesse de mouvement et sans nécessiter la mise en place de chemins de roulement.

En conséquence, l'invention concerne un dispositif pour filmage par travelling comprenant des caractéristiques de la revendication 1.

Dans le cadre de la présente invention, on entend désigner par le vocable « travelling », une installation comprenant un véhicule sur lequel est monté un dispositif de prises de vues et dont le déplacement au-dessus d'une surface est effectué à faible vitesse, celle-ci étant généralement inférieure à 25 (plus généralement 15) km/h et excédant rarement 10 km/h, les vitesses sensiblement comprises entre 0,5 et 6 km/h étant les plus usuelles.

Dans le travelling selon l'invention, l'appareil de prises de vues n'est pas critique. Il peut être invariablement un appareil photographique, une caméra pour les prises de vues cinématographiques ou une caméra de télévision. L'appareil de prises de vues peut être du type à support photosensible ou du type numérique.

Le véhicule sert à déplacer l'appareil de prises de vues. Selon l'invention, il comprend une plate-forme qui est portée sur un coussin de gaz.

Les plates-formes à coussin de gaz sont bien connues dans la technique des véhicules à coussins d'air (« Les véhicules à coussins d'air », Conférence prononcée par Jean Bertin le 23 janvier 1963 - http://aernav.free.fr/Coussin/Vehicules_CA.html ; « L'aéroglisseur, Qu'est-ce que c'est ? » - http://perso.wanadoo.fr/leslandes/aero/histo/histo%201.ht m).

De manière générale, une plate-forme à coussin de gaz comprend, sous ladite plate-forme, une chambre dans laquelle on insuffle un courant de gaz pour soulever la plate-forme. Le choix du gaz n'est pas critique pour la définition de l'invention. Le gaz utilisé est habituellement de l'air. D'autres gaz peuvent néanmoins également convenir et s'imposer pour certaines applications particulières. Dans le cas de prises de vues dans des conditions dangereuses, par exemple en présence d'explosifs ou de substances chimiques fortement oxydables, il peut se révéler souhaitable d'utiliser un gaz inerte, non oxydant, tel que de l'azote ou de l'argon, par exemple.

Il existe diverses conceptions de plate-forme à coussin de gaz. Une première conception comprend les plates-formes à chambre de sustentation pleine. Dans cette conception, la plate-forme surmonte une coque ou cloche retournée, sous laquelle on insuffle le courant de gaz. Le gaz insufflé sous la cloche s'échappe à la périphérie de celle-ci et un coussin ou matelas de gaz de sustentation est ainsi formé sous la cloche.
Une autre conception de plate-forme à coussin gazeux comprend les plates-formes dans lesquelles la chambre de sustentation comprend une fente périphérique. Selon cette conception, la plate-forme comprend une fente périphérique orientée vers le bas. Le gaz est insufflé dans cette fente de manière à former un voile périphérique de fluide dynamique qui contribue à maintenir un coussin ou matelas de gaz de sustentation sous la plate-forme.

Dans le travelling selon l'invention, la plate-forme à coussin de gaz peut être indifféremment du type à chambre de sustentation pleine, du type à chambre de sustentation à fente périphérique ou de tout autre type connu.

Dans le travelling selon l'invention, tous moyens appropriés peuvent être mis en oeuvre pour insuffler le gaz de sustentation dans la chambre de sustentation de la plate-forme. Le moyen utilisé pour insuffler le gaz de sustentation va toutefois dépendre du choix du gaz de sustentation.

Dans une première forme de réalisation du travelling selon l'invention, le gaz de sustentation est de l'air que l'on insuffle dans la chambre de sustentation de la plate-forme au moyen d'un ventilateur, selon la conception habituelle des véhicules à coussins d'air. Dans cette forme de réalisation de l'invention, le moteur du ventilateur peut être indifféremment un moteur électrique, un moteur pneumatique, un moteur hydraulique ou un moteur à combustion interne. Les ventilateurs électriques sont préférés, d'une part pour leur facilité de mise en oeuvre et, d'autre part, du fait qu'ils sont généralement plus silencieux.

Dans la forme de réalisation qui vient d'être décrite, le ventilateur et son moteur peuvent être montés sur la plate-forme, comme c'est habituellement le cas pour les véhicules à coussins d'air connus. Dans ce mode de réalisation de l'invention, le moteur du ventilateur est de préférence un moteur électrique pour réduire le bruit.

Dans une forme de réalisation préférée du travelling selon l'invention, le ventilateur et son moteur sont localisés en dehors de la plate-forme et le ventilateur est relié à la chambre de sustentation de la plate-forme au moyen d'un tuyau approprié. Dans cette forme de réalisation du travelling selon l'invention, le tuyau doit être suffisamment flexible pour ne pas entraver le déplacement de la plate-forme. Cette forme de réalisation de l'invention permet d'écarter le ventilateur et son moteur, des zones de prises de vues, ce qui permet d'éviter que les prises de vues soient perturbées par le bruit du ventilateur et de son moteur.

Dans une variante avantageuse de la forme de réalisation préférée qui vient d'être décrite, on utilise avantageusement un ventilateur portable, celui-ci pouvant ainsi être transporté par un opérateur ou un assistant qui suit à distance la plate-forme du travelling.

Dans une forme de réalisation supplémentaire du travelling selon l'invention, le gaz nécessaire à la sustentation de la plate-forme est fourni par une bonbonne de gaz sous pression, embarquée sur la plate-forme. Dans cette forme de réalisation du travelling selon l'invention, le gaz de sustentation n'est pas critique et peut être indifféremment de l'air, ou un autre gaz ou un mélange de gaz.
Cette forme de réalisation de l'invention présente l'avantage de générer peu de bruit.

Dans le travelling selon l'invention, la plate-forme peut comprendre un seul coussin de gaz ou, en variante, au moins deux coussins de gaz. En pratique, le nombre optimum de coussins de gaz va dépendre des dimensions du travelling et du poids de l'appareil de prises de vues, du matériel additionnel qu'il doit supporter et, le cas échéant, du nombre d'opérateurs qu'il doit supporter. Dans la majorité des cas, un seul coussin de gaz suffit.

La forme et les dimensions de la plate-forme doivent être adaptées pour supporter l'appareil de prises de vues, le matériel additionnel éventuellement embarqué (tel que, par exemple, du matériel de prise de son et/ou du matériel d'éclairage) et, éventuellement, un ou plusieurs opérateurs. Elles doivent dès lors être adaptées dans chaque cas particulier, au moyen d'un travail de routine au bureau d'études.

La plate-forme est conçue en fonction des circonstances et elle peut être plane ou non. Elle peut être circulaire, ovale ou polygonale, par exemple carrée, rectangulaire, hexagonale ou octogonale.

La fixation de l'appareil de prises de vues sur la plate-forme peut être réalisée par tout moyen adéquat, communément utilisé sur les travellings.

Dans une forme de réalisation particulière du travelling selon l'invention, l'appareil de prises de vues (par exemple une caméra) est articulé sur une flèche qui est reliée à la plate-forme au moyen d'une articulation. Dans un mode de réalisation avantageux de cette forme de réalisation de l'invention, la flèche est par exemple articulée à l'extrémité supérieure d'un mât vertical fixé à la plate-forme, de manière à pouvoir pivoter en azimut et en élévation. L'appareil de prises de vues est fixé à une extrémité de la flèche et est également orientable en azimut et en élévation. Lors de l'exploitation de cette forme de réalisation de l'invention, un opérateur manoeuvre le bras en fonction des directives d'un cadreur (le cameraman en langage anglo-saxon). Dans cette forme de réalisation du travelling selon l'invention, la plate-forme peut être agencée pour supporter l'opérateur et lui permettre de manoeuvrer la flèche. Cette variante de l'invention est spécialement bien adaptée aux prises de vues sur des terrains accidentés, des plans d'eau ou en mer. Le cadreur peut se trouver sur la plate-forme. En général, il se trouve hors de celle-ci, par exemple dans un studio d'où il manoeuvre l'appareil de prises de vues au moyen d'une liaison radioélectrique. Dans une autre variante du travelling selon l'invention, la flèche est agencée de manière à la rendre manoeuvrable par un opérateur situé en dehors de la plate-forme. Cette variante de l'invention convient lorsque les prises de vues sont réalisées sur des terrains peu accidentés (par exemple en rue, sur une place publique, sur une plage, en studio).

Conformément à l'invention, la plate-forme est équipée d'un organe pour la diriger manuellement au-dessus d'une surface.

Le vocable « surface » désigne de manière générale toute surface sur laquelle un véhicule à coussin d'air est normalement habilité à évoluer. Il peut s'agir indifféremment d'une surface solide ou d'une surface liquide, d'une surface unie ou d'une surface accidentée. Ladite surface peut être localisée indifféremment à l'intérieur d'un immeuble ou à l'extérieur de celui-ci. Par extension le vocable « surface » englobe aussi la surface des planètes non gazeuse.

Le vocable « manuellement » signifie que la plate-forme est dirigée à la main, par un opérateur, à l'exclusion d'une machine.

L'organe pour diriger la plate-forme a pour fonction d'orienter la plate-forme sur la surface, par exemple de la faire pivoter ou de la diriger le long d'un chemin prédéterminé ou dans une direction prédéterminée pendant qu'on la déplace au-dessus de la surface précitée. Il peut être tout organe approprié pour permettre à un ou plusieurs opérateurs de diriger la plate-forme à la main. Dans la suite du présent mémoire, ledit organe sera désigné « organe de direction ».

Dans une forme de réalisation particulière du travelling selon l'invention, l'organe de direction susdit comprend au moins une poignée, fixée à la plate-forme. Une seule poignée peut suffire. On préfère généralement prévoir plusieurs poignées réparties à la périphérie de la plate-forme. Le nombre optimum de poignées va dépendre de divers paramètres, notamment de la superficie de la plate-forme, de son profil et du nombre d'opérateurs employés pour la diriger au-dessus de la surface.

Dans une autre forme de réalisation particulière du travelling selon l'invention, l'organe de direction comprend un manche dont une extrémité est articulée à la plate-forme. L'articulation du manche à la plate-forme peut par exemple comprendre un cardan ou une rotule. On choisit avantageusement une articulation qui permet au manche de pivoter en azimut et en élévation. En variante, l'organe de direction peut comprendre plusieurs manches articulés à la plate-forme.

Dans le travelling selon l'invention, la plate-forme est normalement couplée à un organe pour la mouvoir ou la déplacer au-dessus de ladite surface. Cet organe, ci-après désigné « organe de déplacement » peut comprendre un véhicule auquel la plate-forme est accrochée. Ce véhicule peut être un tracteur qui précède la plate-forme ou un pousseur, qui la suit. La connexion de la plate-forme au véhicule est normalement flexible ou pourvue d'une articulation, pour permettre un degré de liberté suffisant dans la direction ou l'orientation de la plate-forme.

Conformément à l'invention, la plate-forme est démunie de dispositif de propulsion autonome.

Dans une autre forme de réalisation préférée de l'invention l'organe de déplacement comprend une ou plusieurs poignées et/ou un ou plusieurs manches fixés à la plate-forme. Dans cette forme de réalisation de l'invention, on peut répéter, pour les poignées et les manches de l'organe de déplacement, ce qui a été dit plus haut concernant les poignées et les manches de l'organe de direction.
Dans une variante préférée de cette forme de réalisation de l'invention, on peut utiliser la même poignée (ou les mêmes poignées) et/ou le même manche (ou les mêmes manches) pour, d'une part, diriger la plate-forme et, d'autre part, la déplacer.

Dans une forme de réalisation supplémentaire du travelling selon l'invention, la plate-forme comprend un volant de stabilisation. Dans cette forme de réalisation de l'invention, le volant a pour fonction de stabiliser l'assiette de la plate-forme. Le choix du volant, en particulier son diamètre et sa masse, ainsi que sa vitesse de rotation vont dépendre de divers paramètres, en particulier des dimensions de la plate-forme et des appareils et/ou des personnes qu'elle embarque. Ses caractéristiques doivent être déterminées dans chaque cas particulier.
Dans la forme de réalisation qui vient d'être décrite du travelling selon l'invention, le volant peut être couplé à un moteur autonome. On préfère mettre en oeuvre un moteur électrique, un moteur pneumatique ou un moteur hydraulique. La connexion mécanique du volant au moteur comprend de préférence un organe d'accouplement escamotable, pour permettre de couper et de restaurer à volonté la connexion du volant au moteur.
Dans une forme de réalisation modifiée, le volant n'a pas de moteur autonome. Dans ce cas, on le couple périodiquement à un moteur amovible pour le lancer, le volant étant maintenu en mouvement par inertie, entre deux couplages au moteur.

Le travelling selon l'invention présente la particularité de ne plus nécessiter la mise en place d'un chemin adéquat avant son utilisation. Il présente ainsi comme avantages, une grande facilité d'utilisation, une grande maniabilité et une grande souplesse d'utilisation.

Le travelling selon l'invention peut être utilisé sur tout type de terrains, ainsi que sur l'eau. Il peut notamment être utilisé en ville, dans des rues ou sur des places pavées, dans des squares, sur des pelouses, ainsi que sur des sols accidentés tels que des prairies, des champs de culture et des collines, des glaciers. L'absence de chemin de roulement le rend spécialement bien adapté à une utilisation en studio, à l'intérieur de bâtiments (par exemple des habitations ou des demeures historiques) ou à l'intérieur de véhicules (par exemple à l'intérieur d'avions, de trains ou de bateaux). Le travelling selon l'invention est spécialement bien adapté à une utilisation sur des plans d'eau, notamment des lacs, des rivières, des fleuves et en mer.

Le travelling selon l'invention trouve une application pour les prises de vues photographiques fixes. Le travelling selon l'invention est bien adapté aux prises de vues animées, spécialement aux prises de vues cinématographiques et aux prises de vues télévisées.

L'invention concerne dès lors également un procédé de filmage par travelling selon la revendication 8.

Dans le procédé selon l'invention, l'appareil de prises de vues est invariablement une caméra de cinéma ou une caméra de télévision.

### Brève description des figures

Des particularités et détails de l'invention vont apparaître au cours de la description suivante des figures annexées, qui représentent une forme de réalisation particulière du travelling selon l'invention.
La figure 1 est une vue schématique en perspective d'une forme de réalisation du travelling selon l'invention ;
La figure 2 montre à plus grande échelle, en section transversale verticale, un détail du travelling de la figure 1 ;
La figure 3 est une forme de réalisation modifiée du travelling de la figure 1.

Les figures ne sont pas dessinées à l'échelle.

Généralement, les mêmes numéros de référence désignent les mêmes éléments.

### Description détaillée de modes de réalisation particuliers

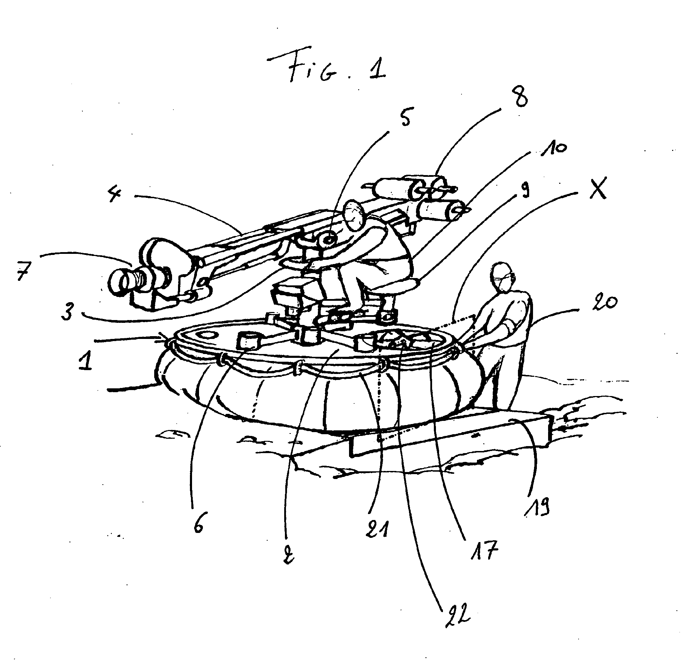

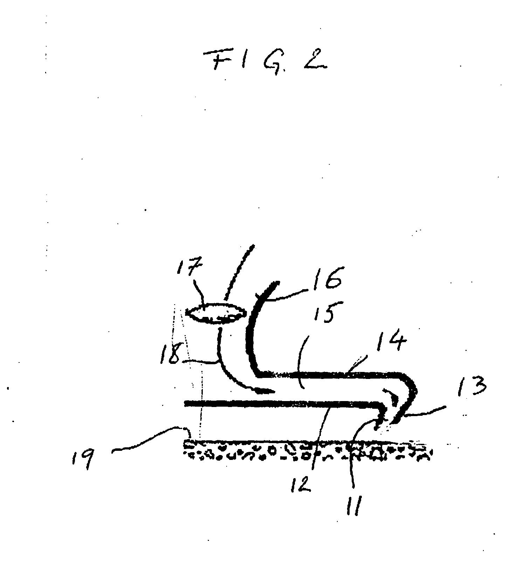

Le travelling représenté à la figure 1 est spécialement adapté aux prises de vues cinématographiques ou de télévision. Il comprend un véhicule désigné de manière générale par la notation de référence 1. Le véhicule 1 comprend une plate-forme 2. Un mât 3 est fixé verticalement à la plate-forme 2 au moyen d'un support à quatre pieds 6. A son extrémité supérieure, le mât 3 porte une flèche 4. La flèche 4 est fixée au mât 3 par l'intermédiaire d'une articulation 5 appropriée pour lui permettre de pivoter en azimut et en élévation.

Une caméra 7 est fixée à une extrémité de la flèche 4. A son extrémité opposée, la flèche 4 est pourvue d'un contrepoids 8 servant à équilibrer le poids de la caméra 7. La caméra 7 est fixée à la flèche 4 par l'intermédiaire d'une articulation (non représentée), conçue pour permettre de l'orienter en azimut et en élévation. Cette articulation est couplée à un moteur (non représenté), qui peut être manoeuvré à distance par un cadreur (ou cameraman) situé dans un studio, au moyen d'une liaison radioélectrique.

La plate-forme 2 porte en outre un siège orientable 9 pour un opérateur schématisé en 10. L'opérateur 10 a pour mission de manoeuvrer la flèche 4 pour l'orienter en azimut et en élévation en fonction d'instruction du cadreur.

Conformément à l'invention, la plate-forme 2 est portée sur un coussin d'air.

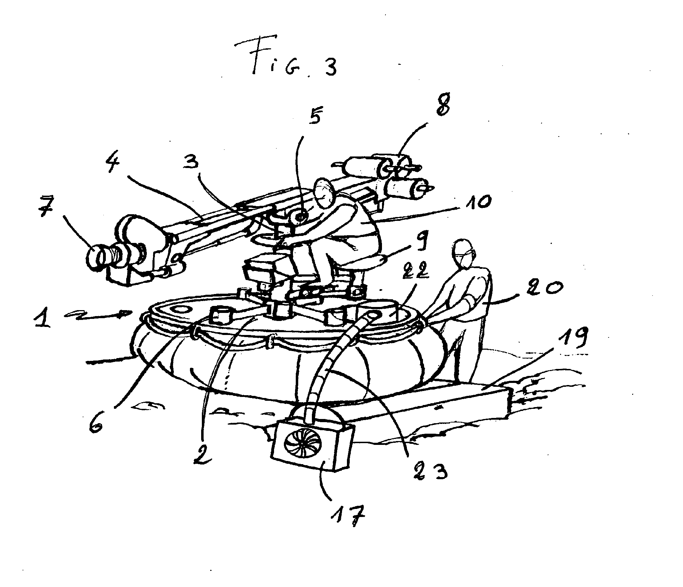

La figure 2 montre, à plus grande échelle, un détail constructif de la plate-forme à coussin d'air 2, désigné par la notation de référence X à la figure 1.

Conformément à la figure 2, la plate-forme 2 est du type à fente périphérique 11. Celle-ci est délimitée entre une plaque 12 sensiblement horizontale formant la base de la plate-forme 2 (ou une partie de celle-ci) et une jupe périphérique 13. La jupe périphérique 13 est prolongée par une plaque annulaire horizontale 14 qui délimite une chambre annulaire 15 en communication avec la fente 11. Une conduite 16 profilée de manière adéquate (par exemple en venturi) débouche au centre de la chambre annulaire 15. Elle contient un ventilateur 17, destiné à puiser de l'air ambiant et à le refouler sous pression, dans le sens de la flèche 18, dans la chambre 15. Le passage de l'air à travers la fente 11 assure la sustentation de la plate-forme au-dessus du sol 19. Le ventilateur 17 est par exemple un ventilateur à moteur électrique, branché sur une batterie (non représentée) embarquée sur la plate-forme 2.

Le travelling représenté à la figure 1 peut comprendre un seul coussin d'air, réparti sensiblement sur la totalité de sa surface. En variante, il peut comprendre plusieurs coussins d'air répartis de manière sensiblement uniforme au-dessous de la plate-forme 2.

Sous la plate-forme 2, le véhicule 1 comprend avantageusement un volant de stabilisation, non représenté. Le volant a pour fonction de stabiliser la position de la plate-forme 2 au-dessus du sol 19, pendant qu'on la manoeuvre. L'entraînement du volant est réalisé au moyen du moteur (non représenté) du ventilateur 17, auquel il est relié par un organe d'accouplement approprié. Ledit organe d'accouplement comprend un embrayage destiné à ouvrir la liaison du moteur au volant, lorsque ce dernier a atteint sa vitesse de régime.

Pour utiliser le travelling représenté aux figures 1 et 2, on démarre le ventilateur 17 de manière à soulever la plate-forme 2 et le matériel qu'il supporte (ainsi que, le cas échéant, l'opérateur 10) et assurer sa sustentation au-dessus du sol. Sous la conduite des instructions reçues du cadreur, un ou plusieurs assistants (tel que celui représenté en 20), déplace manuellement le véhicule 1 au-dessus du sol 19 et le dirige simultanément. Pour faciliter la tâche de l'assistant 20, la plate-forme est équipée de poignées 21 à sa périphérie.

Dans le travelling représenté aux figures 1 et 2, le ventilateur 17 et son moteur sont montés sur la plate-forme 2 et transportés avec elle.

Dans une forme de réalisation préférée, représentée à la figure 3, le ventilateur 17 et son moteur sont situés en dehors de la plate-forme 2 et un tuyau flexible 23 relie le ventilateur 17 à la prise d'air circulaire 22 de la plate-forme 2. Dans cette forme de réalisation de l'invention, le ventilateur 17 peut être posé sur le sol, comme représenté à la figure 3. En variante, le ventilateur 17 peut être monté sur un chariot. Selon une autre variante, le ventilateur 17 est porté par un opérateur qui évolue à proximité de la plate-forme 2.

## Revendications

1. Dispositif pour filmage par travelling comprenant un appareil de prises de vues sur un véhicule, **caractérisé en ce que** le véhicule (1) comprend une plate-forme (2) à coussin de gaz du type de celles connues en soi dans la technique des véhicules à coussins d'air, ladite plate-forme étant dépourvue d'un dispositif autonome de propulsion et étant équipée d'un organe (21) pour la diriger manuellement au-dessus d'une surface (19).

2. Dispositif selon la revendication, 1 **caractérisé en ce qu**'un dispositif pour former le coussin de gaz comprend une chambre de sustentation (15) située sous la plate-forme (2) et un moyen pour insuffler un gaz de sustentation dans ladite chambre, ledit moyen comprenant un ventilateur (17) qui est localisé en dehors de la plate-forme (2) et qui est relié par un tuyau (23) à la chambre de sustentation et/ou un réservoir de gaz sous pression, qui est embarqué sur la plate-forme (2) et qui est relié à ladite chambre de sustentation.

3. Dispositif selon la revendication 1 ou 2, **caractérisé en ce que** le gaz comprend de l'air.

4. Dispositif selon l'une quelconque des.revendications 1 à 3, **caractérisé en ce que** la plate-forme (2) est équipée d'un organe (21) pour la déplacer manuellement au-dessus de la surface (19).

5. Dispositif selon l'une quelconque des revendications 1 à 4, **caractérisé en ce que** l'organe de direction et/ou l'organe de déplacement de la plate-forme (2) comprend au moins une poignée (21) fixée à la plate-forme et/ou au moins un manche dont une extrémité est articulée à la plate-forme.

6. Dispositif selon la revendication 5, **caractérisé en ce que**, dans le cas où l'organe de direction et/ou l'organe de déplacement comprend au moins un manche, ledit manche est articulé à la plate-forme (2) de manière à pouvoir pivoter en azimut et en élévation.

7. Dispositif selon l'une quelconque des revendications 1 à 6, **caractérisé en ce que** la plate-forme (2) comprend un volant de stabilisation.

8. Procédé de filmage par travelling, **caractérisé en ce qu**'on met en oeuvre un dispositif conforme à l'une quelconque des revendications 1 à 7, comprenant un appareil de prises de vues (7) sur une plate-forme (2) à coussin de gaz du type de celles connues en soi dans la technique des véhicules à coussins d'air ladite plateforme étant dépourvue d'un dispositif autonome de propulsion et on déplace la plate-forme (2) manuellement au-dessus d'une surface (19).

## Claims

1. System for making travelling shots using a device for filming from a vehicle which (1) includes a platform (2) on a gas cushion similar to those used for suspension systems, which cannot move autonomously but which is equipped with controls (21) for steering it manually on a surface (19).

2. System according to claim 1, whose gas cushion includes a suction chamber (15) located under the platform (2) and a means of blowing lifting gas into the chamber using a ventilator (17) which is located next to the platform (2) and is connected via a tube (23) to the suction chamber, and/or a pressurised gas container, which is carried on the platform (2) and is connected to the suction chamber.

3. System according to claim 1 or 2, with air contained in the gas.

4. System according to claims 1 to 3, whose platform (2) is equipped with controls (21) for moving it manually on a surface (19), since it cannot move around autonomously.

5. System according to claims 1 to 4, whose steering and/or movement controls for the platform (2) include at least a handle (21) attached to the platform and/or at least a stick with one end connected to the platform.

6. System according to claim 5, whose steering and/or movement controls include at least a stick connected to the platform (2) so that it can pivot in all directions while elevated.

7. System according to claims 1 to 6, whose platform (2) includes a stabilisation wheel.

8. Procedure for making travelling shots, via the implementation of a system consistent with claims 1 to 7, including a device for filming (7) from a platform (2) on a gas cushion similar to those used for suspension systems; the platform (2) cannot move autonomously but is moved manually on a surface (19).

## Patentansprüche

1. Eine Filmaufnahmevorrichtung mittels Nachfolgeaufnahme bestehend aus einem Aufzeichnungsgerät auf einem Fahrzeug, , das (1) eine Plattform (2) mit einem Gaskissen umfasst. Die Plattform entspricht jenen, die aus der Technik der Luftkissen-Fahrzeuge bekannt sind und ist mit einer eigenen Beschleunigungsvorrichtung versehen und mit einem Organ ausgestattet (21), mit dem sie oberhalb einer Oberfläche (19) ausgerichtet werden kann.

2. Vorrichtung gemäß Patentanspruch 1, bestehend aus einer Einrichtung zur Bildung eines Gaskissens, die eine Auftriebskammer (15) unter der Plattform (2) bildet und eine Vorrichtung zur Einleitung eines Auftriebsgases in die besagte Kammer vorsieht. Die besagte Vorrichtung umfasst einen Ventilator (17), der außerhalb der Plattform (2) angeordnet ist und der mittels eines Schlauches (23) mit der Auftriebskammer und/oder dem unter Druck stehenden Gasreservoir verbunden ist, das auf der Plattform (2) geladen und mit der besagten Auftriebskammer verbunden ist.

3. Vorrichtung gemäß den Patentansprüchen 1 oder 2, **dadurch gekennzeichnet, dass** das Gas Luft umfasst.

4. Vorrichtung gemäß einem beliebigen der Patentansprüche 1 bis 3, **dadurch gekennzeichnet, dass** die Plattform {2) mit einem Organ (21) für die manuelle Ortsverlagerung über die Oberfläche (19) ausgestattet ist, weil sie keine autonome Beschleunigungsvorrichtung vorsieht.

5. Vorrichtung gemäß einem beliebigen der Patentansprüche 1 bis 4, **dadurch gekennzeichnet, dass** das Steuerungsorgan und /oder das Ortsverlagerungsorgan der Plattform (2) mindestens einen Handgriff(21) umfasst, der an der Plattform befestigt ist und/oder mindestens eine Halterung, deren eines Ende an der Plattform per Gelenk befestigt ist.

6. Vorrichtung gemäß Patentanspruch 5, **dadurch gekennzeichnet, dass** in dem Fall, in dem das Lenkungsorgan und/oder das Organ für den Ortswechsel mindestens einen Handgriff umfasst, dieser besagt Handgriff mit einem Gelenk an der Plattform (2) derart befestigt ist, dass sie horizontal und vertikal drehen kann.

7. Vorrichtung gemäß einem beliebigen der Patentansprüche 1 bis 6, **dadurch gekennzeichnet, dass** die Plattform (2) ein Stabilisationsrad umfasst.

8. Verfahren zur Filmaufnahme mittels Nachfolgeaufnahme, **dadurch gekennzeichnet, dass** man eine Vorrichtung einsetzt gemäß einem beliebigen der Patentansprüche 1 bis 7, die einen Aufnahmeapparat (7) auf einer Plattform (2) mit einem Gaskissen enthält, ähnlich jenen, die man aus der Technik der Luftkissenfahrzeuge kennt. Die besagte Plattform vorsieht keine autonome Beschleunigungsvorrichtung und wird (2) manuell oberhalb einer Oberfläche (19) bewegt.
